# EUROPEAN PATENT APPLICATION

(11) **EP 4 354 957 A1**
(43) Date of publication of application: **17.04.2024**
(21) Application number: 22803769.3
(22) Date of filing: 28.04.2022
(51) Int. Cl.: H04W 36/00, H04W 88/04

(54) **INFORMATION TRANSMISSION METHOD AND APPARATUS, RELAY USER EQUIPMENT, AND REMOTE USER EQUIPMENT**

(30) Priority: 21.05.2021 CN 202110557572
(71) Applicant: Datang Mobile Communications Equipment Co., Ltd., Beijing 100085 (CN)
(72) Inventor: ZHANG, Huiying, Beijing 100085 (CN); ZHAO, Yali, Beijing 100085 (CN)
(74) Representative: Studio Torta S.p.A.
(86) International application number: PCT/CN2022/089840
(87) International publication number: WO 2022/242445

(57) **Abstract**

An information transmission method, an information transmission device, a relay UE and a remote UE are provided. The method includes: transmitting to a remote UE, by a relay UE, cell change indication information for indicating that a serving cell of the relay UE changes, in a case that the serving cell of the relay UE changes, where the remote UE is connected to a network through the relay UE.

## Description

### CROSS-REFERENCE TO RELATED APPLICATION

This application claims a priority to Chinese Patent Application No. 202110557572.X, filed in China on May 21, 2021, which is incorporated in its entirety by reference herein.

### TECHNICAL FIELD

The present disclosure relates to the technical field of communications, and in particular to an information transmission method, an information transmission device, a relay UE, and a remote UE.

### BACKGROUND

In the related technologies, a relay (UE-to-Network Relay) from a user equipment (User Equipment, UE) to a network is introduced to extend network coverage. The relay itself may be a UE having a relay function. For UE-to-Network relay, a Uu interface is adopted as an interface between a relay UE (relay UE) and the network, and a radio direct communication (PC5) interface (also referred to as a direct communication interface, which is described in the protocol as a sidelink (Sidelink, SL)) is adopted as an interface between the relay UE and a remote UE (remote UE) (i.e., a relayed UE). For the relayed UE, the link between the relay and the network may be referred to as a backhaul link (Backhaul link).

For UE-to-Network relay, the remote UE is connected to the network through the relay UE, and the remote UE receives system information and a paging message that are forwarded by the relay UE, to perform uplink/downlink control-plane and user-plane data transmission. The remote UE and relay UE have a same serving cell. Since the remote UE does not know about the change of the serving cell of the relay UE, there exists a problem that the relay mode does not work properly.

### SUMMARY

The present disclosure is to provide an information transmission method, an information transmission device, a relay UE, and a remote UE, to solve a problem that a relay mode does not work properly as a remote UE does not know about a change of a serving cell of a relay UE.

In order to realize the above object, embodiments of the present disclosure provide a method, including:

transmitting to a remote UE, by a relay UE, cell change indication information for indicating that a serving cell of the relay UE changes, in a case that the serving cell of the relay UE changes, where the remote UE is connected to a network through the relay UE.

The cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

The relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

The method further includes:
transmitting, to the remote UE, system information of a target cell after the serving cell of the relay UE changes.

The transmitting to the remote UE by the relay UE, the cell change indication information for indicating that the serving cell of the relay UE changes, includes:
transmitting a first message to the remote UE, where the first message carries the cell change indication information;
where the first message includes one of the following:
a media access control layer control element (MAC CE);
physical layer sidelink control information (SCI);
a direct communication interface (PCS) radio resource control (RRC) message; or,
a PC5 non-access stratum message.

The transmitting to the remote UE by the relay UE, the cell change indication information for indicating that the serving cell of the relay UE changes, includes:
transmitting to the remote UE through broadcast, multicast or unicast by the relay UE, the cell change indication information.

The MAC CE has a corresponding first logical channel identity (LCID) in a case that the cell change indication information is carried in the MAC CE, and the first LCID is used for indicating that the cell change indication information is carried in the MAC CE.

Change of the serving cell includes handover or cell reselection.

In order to realize the above object, embodiments of the present disclosure further provide an information transmission method, including:
receiving cell change indication information by a remote UE, where the cell change indication information is transmitted by a relay UE in a case that a serving cell of the relay UE changes and is used for indicating that the serving cell of the relay UE changes, and the remote UE is connected to a network through the relay UE.

The cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

The relationship between the target cell and the source cell includes one of the following::
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

The method further includes:
receiving, from the relay UE, system information of a target cell after the serving cell of the relay UE changes.

The receiving the cell change indication information by the remote UE includes:
receiving a first message, where the first message carries the cell change indication information;
where the first message includes one of the following:
a media access control layer control element (MAC CE);
physical layer sidelink control information (SCI);
a direct communication interface (PCS) radio resource control (RRC) message; or,
a PC5 non-access stratum message.

After the receiving the cell change indication information by the remote UE, the method further includes:
reading the system information of the target cell based on the cell change indication information; and
executing a target event based on the system information of the target cell, where the target event includes relay reselection, routing area update (RAU), radio access network based notification area update (RNAU), or target cell access.

Change of the serving cell includes handover or cell reselection.

In order to achieve the above object, embodiments of the present disclosure further provide a relay UE, including: a memory, a transceiver, and a processor, where the memory is configured to store a computer program, the transceiver is configured to transmit and receive data under control of the processor, and the processor is configured to read the computer program in the memory and perform following operation:
transmitting to a remote UE by the relay device, via the transceiver, cell change indication information for indicating that a serving cell of the relay UE changes, in a case that the serving cell of the relay UE changes, where the remote UE is connected to a network through the relay UE.

The cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

The relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

The transceiver is configured to:
transmit, to the remote UE, system information of a target cell after the serving cell of the relay UE changes.

The transceiver is configured to:
transmit a first message to the remote UE, where the first message carries the cell change indication information;
where the first message includes one of the following:
a media access control layer control element (MAC CE);
physical layer sidelink control information (SCI);
a direct communication interface (PCS) radio resource control (RRC) message; or,
a PC5 non-access stratum message.

The transceiver is configured to:
transmit to the remote UE through broadcast, multicast or unicast, the cell change indication information.

The MAC CE has a corresponding first logical channel identity (LCID) in a case that the cell change indication information is carried in the MAC CE, and the first LCID is used for indicating that the cell change indication information is carried in the MAC CE.

Change of the serving cell includes handover or cell reselection.

In order to realize the above object, embodiments of the present disclosure further provide an information transmission device, including:
a first transmitting unit, configured to transmit to a remote UE, cell change indication information for indicating that a serving cell of a relay UE changes, in a case that the serving cell of the relay UE changes, where the remote UE is connected to a network through the relay UE.

The cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

The relationship between the target cell and the source cell includes one of the following:
The relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

The information transmission device according to the embodiments of the present disclosure may further include:
a second transmitting unit, configured to transmit, to the remote UE, system information of a target cell after the serving cell of the relay UE changes.

The first transmitting unit is specifically configured to:
transmit a first message to the remote UE, where the first message carries the cell change indication information;
where the first message includes one of the following:
a media access control layer control element (MAC CE);
physical layer sidelink control information (SCI);
a direct communication interface (PCS) radio resource control (RRC) message; or,
a PC5 non-access stratum message.

The first transmitting unit is specifically configured to:
transmit to the remote UE through broadcast, multicast or unicast, the cell change indication information.

The MAC CE has a corresponding first logical channel identity (LCID) in a case that the cell change indication information is carried in the MAC CE, and the first LCID is used for indicating that the cell change indication information is carried in the MAC CE.

Change of the serving cell includes handover or cell reselection.

In order to achieve the above object, embodiments of the present disclosure further provide a computer readable storage medium, where the computer readable storage medium having a computer program stored thereon, and the computer program, when being executed by a processor, performs steps of the information transmission method described above.

In order to achieve the above object, embodiments of the present disclosure further provide a remote UE, including: a memory, a transceiver, and a processor, where the memory is configured to store a computer program, the transceiver is configured to transmit and receive data under control of the processor, and the processor is configured to read the computer program in the memory and perform following operation:

receiving cell change indication information via a transceiver, where the cell change indication information is transmitted by a relay UE in a case that a serving cell of the relay UE changes and is used for indicating that the serving cell of the relay UE changes, and the remote UE is connected to a network through the relay UE.

The cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

The relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

The transceiver is configured to:
receive, from the relay UE, system information of a target cell after the serving cell of the relay UE changes.

The transceiver is configured to:
receive a first message, where the first message carries the cell change indication information;
where the first message includes one of the following:
   a media access control layer control element (MAC CE);
   physical layer sidelink control information (SCI);
   a direct communication interface (PCS) radio resource control (RRC) message; or,
   a PC5 non-access stratum message.

The processor is configured to read the computer program in the memory and perform following operations:
reading the system information of the target cell based on the cell change indication information; and
executing a target event based on the system information of the target cell, where the target event includes relay reselection, routing area update (RAU), radio access network based notification area update (RNAU), or target cell access.

Change of the serving cell includes handover or cell reselection.

In order to realize the above object, embodiments of the present disclosure also provide an information transmission device, including:
a first receiving unit, configured to receive cell change indication information, where the cell change indication information is transmitted by a relay UE in a case that a serving cell of the relay UE changes and is used for indicating that the serving cell of the relay UE changes, and a remote UE is connected to a network through the relay UE.

The cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

The relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

The information transmission device according to the embodiments of the present disclosure further includes:
a second receiving unit, configured to receive, from the relay UE, system information of a target cell after the serving cell of the relay UE changes.

The first receiving unit is specifically configured to:
receive a first message, where the first message carries the cell change indication information;
where the first message includes one of the following:
a media access control layer control element (MAC CE);
physical layer sidelink control information (SCI);
a direct communication interface (PCS) radio resource control (RRC) message; or,
a PC5 non-access stratum message.

The information transmission device according to the embodiments of the present disclosure further includes:
an information reading unit, configured to read the system information of the target cell based on the cell change indication information; and
a first processing unit, configured to execute a target event based on the system information of the target cell, where the target event includes relay reselection, routing area update (RAU), radio access network based notification area update (RNAU), or target cell access.

Change of the serving cell includes handover or cell reselection.

In order to achieve the above object, embodiments of the present disclosure further provide a processor readable storage medium, where the processor readable storage medium stores a computer program, and the computer program is used to cause a processor to perform steps of the information transmission method described above.

The above technical solutions of the present disclosure have at least the following beneficial effects.

In the above technical solutions of the embodiments of the present disclosure, in a case that the serving cell of the relay UE changes, the relay UE transmits to the remote UE the cell change indication information for indicating that the serving cell of the relay UE changes, where the remote UE is connected to the network through the relay UE. In this way, it is ensured that the remote UE operating in the relay mode can know about the change of the serving cell in a timely manner so as to perform corresponding subsequent operations, which ensures normal work of the relay mode.

### BRIEF DESCRIPTION OF THE DRAWINGS

FIG. 1 is a schematic diagram of composition of an SL media access control (Media Access Control, MAC) protocol data unit (Protocol Data Unit, PDU) in the related technologies;
FIG. 2 is a schematic diagram of a format of a sidelink shared channel (Sidelink Shared Channel, SL-SCH) MAC subheader in the related technologies;
FIG. 3 is a first flow chart of an information transmission method according to embodiments of the present disclosure;
FIG. 4 is a first schematic diagram of a format of an SL MAC control element (Control Element, CE) newly defined in embodiments of the present disclosure;
FIG. 5 is a second schematic diagram of a format of an SL MAC CE newly defined in embodiments of the present disclosure;
FIG. 6 is a second flow chart of an information transmission method according to embodiments of the present disclosure;
FIG. 7 is a first flow chart for implementing an information transmission method according to embodiments of the present disclosure;
FIG. 8 is a second flow chart for implementing an information transmission method according to embodiments of the present disclosure;
FIG. 9 is a structural block diagram of a relay UE according to embodiments of the present disclosure;
FIG. 10 is a first schematic diagram of modules of an information transmission device according to embodiments of the present disclosure;
FIG. 11 is a structural block diagram of a remote UE according to embodiments of the present disclosure; and
FIG. 12 is a second schematic diagram of modules of an information transmission device according to embodiments of the present disclosure.

### DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of the present disclosure refers to two or more than two, and other words for expressing quantities are similar to it.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

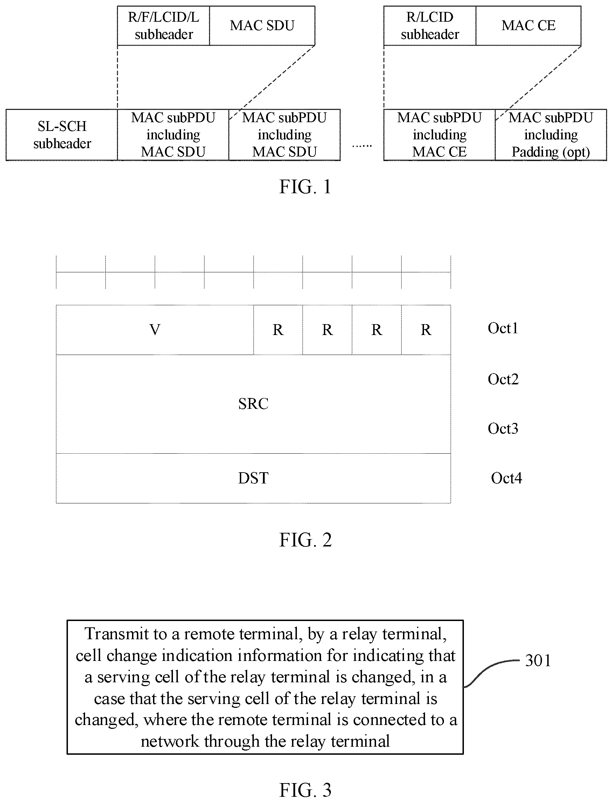

For the PC5 interface, UEs may communicate with each other through broadcast, multicast, or unicast, and carry transmission type (cast type) information in physical layer sidelink control information (Sidelink Control Information, SCI). For the unicast, lower 8 bits of a source UE identity and lower 16 bits of a target UE identity are carried in second SCI of the physical layer, and upper 16 bits of the source UE identity and upper 8 bits of the target UE identity are carried in a subheader of a sidelink shared channel (Sidelink Shared Channel, SL-SCH) of the media access control (Media Access Control, MAC) layer. For the multicast, lower 8 bits of the source UE identity and lower 16 bits of a group identity are carried in second SCI of the physical layer, and upper 16 bits of the source UE identity and upper 8 bits of the group identity are carried in a subheader of a SL-SCH of the MAC layer. For the broadcast, low 8 bits of the source UE identity and lower 16 bits of broadcast information identity are carried in second SCI of the physical layer, and upper 16 bits of the source UE identity and upper 8 bits of the broadcast information identity are carried in a subheader of a SL-SCH of the MAC layer. The specific MAC structure is shown in FIG. 1, and format of the SL-SCH MAC subheader is shown in FIG. 2. At the PC5 interface, a sidelink broadcast channel (Sidelink Broadcast Channel, SL-BCH) is used to carry synchronization information.

For UE-to-Network relay, the remote UE is connected to the network through the relay UE, and the remote UE receives system information and a paging message that are forwarded by the relay UE, to perform uplink/downlink control-plane and user-plane data transmission. The remote UE and relay UE have a same serving cell. Since the remote UE does not know about the change of the serving cell of the relay UE, there exists a problem that the relay mode does not work properly.

In order to solve the above problem, embodiments of the present disclosure provide an information transmission method and an information transmission device, where the method and the device are based on the same application concept. Since the principles of solving problems in the method and the device are similar, reference may be made to each other for implementations of the device and the method, the repetition of which is not provided again herein.

FIG. 3 is a flow diagram of an information transmission method according to embodiments of the present disclosure, which is applied to a relay UE and includes the follow step.

Step 301: transmitting to a remote UE, by a relay UE, cell change indication information for indicating that a serving cell of the relay UE changes, in a case that the serving cell of the relay UE changes, where the remote UE is connected to a network through the relay UE.

Change of the serving cell includes handover or cell reselection. The change of the serving cell of the relay UE may include two cases: occurrence of cell reselection and occurrence of cell handover.

It should be noted that, the relay UE sends the cell change indication information to the remote UE, so that the remote UE can be informed of the change of the serving cell in a timely manner, so as to perform corresponding subsequent operations, e.g., whether relay reselection is required or whether routing area update (Route Area Update, RAU)/RAN-based notification area update (RAN-based Notification Area Update, RNAU) needs to be initiated, to ensure normal work of the relay mode.

In the information transmission method according to the embodiments of the present disclosure, in a case that the serving cell of the relay UE changes, the relay UE transmits to the remote UE the cell change indication information for indicating that the serving cell of the relay UE changes, where the remote UE is connected to the network through the relay UE. In this way, it is ensured that the remote UE operating in the relay mode can know about the change of the serving cell in a timely manner so as to perform corresponding subsequent operations, which ensures normal work of the relay mode.

Optionally, the cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

The remote UE knows about the relationship between the target cell after the serving cell of the relay UE changes and the source cell before the serving cell of the relay UE changes based on the second indication information, which further facilitates the remote UE determining what kind of operation is to be subsequently performed.

Optionally, the relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

As an optional implementation, the method according to the embodiments of the present disclosure may further include:
transmitting, to the remote UE, system information of a target cell after the serving cell of the relay UE changes.

It should be noted that there is no chronological order for this step and step 301.

As an optional implementation, in step 301 of the embodiments of the present disclosure, the transmitting to the remote UE by the relay UE, the cell change indication information for indicating that the serving cell of the relay UE changes, may include:
transmitting a first message to the remote UE, where the first message carries the cell change indication information;
where the first message includes one of the following:
   a MAC control element (Control Element, CE);
   physical layer SCI;
   a PC5 radio resource control (RRC) message; or,
   a PC5 non-access stratum message.

The MAC CE refers to an SL MAC CE. The physical layer SCI is a first SCI or a second SCI.

As an optional implementation, in step 301 of the embodiments of the present disclosure, the transmitting to the remote UE by the relay UE, the cell change indication information for indicating that the serving cell of the relay UE changes, may include:
transmitting to the remote UE through broadcast, multicast or unicast by the relay UE, the cell change indication information.

Optionally, the MAC CE has a corresponding first logical channel identity (Logical Channel Identity, LCID) in a case that the cell change indication information is carried in the MAC CE, and the first LCID is used for indicating that the cell change indication information is carried in the MAC CE.

For example, the first LCID has a value of 58, which indicates that the SL MAC CE corresponding to the logical channel identity carries the cell change indication information.

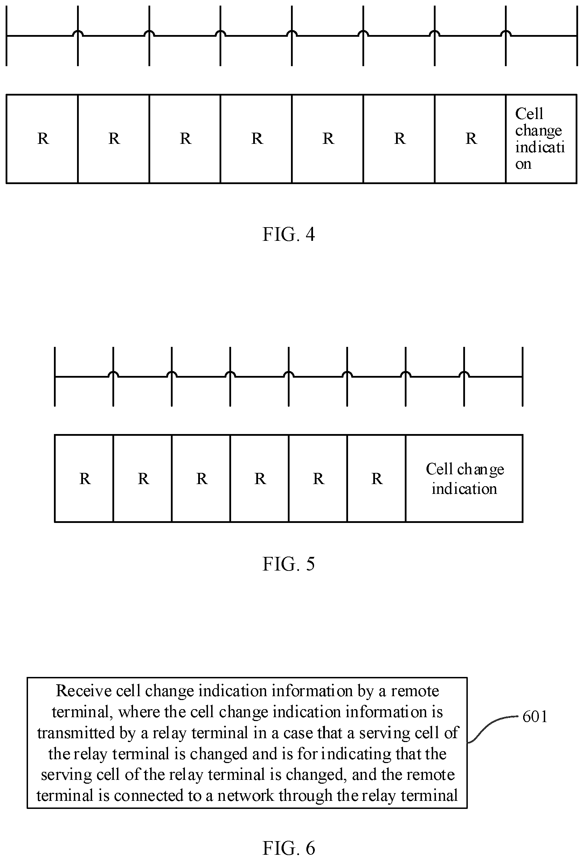

The cell change indication information is carried in the MAC CE, and a MAC CE format may be newly defined, as shown in FIG. 4 and FIG. 5. In FIG. 4, 1 bit in the MAC CE is used to indicate whether the cell changes, and bits other than that the 1 bit are reserved bits (R).

Specifically, 1bit is used to indicate whether the cell changes or not, as shown in Table 1.

**Table 1 Indication of cell change only**

| Index | values |
|---|---|
| 0 | Cell change |
| 1 | Reserved |

"0" indicates that the cell changes; "1" indicates that the cell is not changed and is a reserved bit.

In addition, in FIG. 5, 2 bits in the MAC CE are used to indicate whether the cell changes or not, and bits other than the 2 bits are reserved bits (R).

Specifically, 2 bits are used to indicate whether the cell changes or not, as shown in Table 2.

**Table 2 Indication of type of target cell**

| Index | Values |
|---|---|
| 00 | Cell change under same base station (Intra-gNB cell change) |
| 01 | Cell change across base stations (Inter-gNB cell change) |
| 10 | Cell change across different routing areas (Inter-RAU/RNAU cell change) |
| 11 | Cell change across different public land mobile networks (Inter-PLMN cell change) |

"00" indicates a cell change under a same base station, that is, the target cell and the source cell are cells under a same base station, i.e., different cells under the same base station; "01" indicates a cell change across base stations, that is, the target area and the source cell are cells of different base stations, i.e., cells under different base stations; "10" indicates a change across different routing areas or a change across different notification areas; "11" indicates a change across PLMN access networks.

In the information transmission method according to the embodiments of the present disclosure, in a case that the serving cell of the relay UE changes, the relay UE transmits to the remote UE the cell change indication information for indicating that the serving cell of the relay UE changes, where the remote UE is connected to the network through the relay UE. In this way, it is ensured that the remote UE operating in the relay mode can know about the change of the serving cell in a timely manner so as to perform corresponding subsequent operations, which ensures normal work of the relay mode.

FIG. 6 is a flow diagram of an information transmission method according to embodiments of the present disclosure, which is applied to a remote device and includes the following step.

Step 601: receiving cell change indication information by a remote UE, where the cell change indication information is transmitted by a relay UE in a case that a serving cell of the relay UE changes and is used for indicating that the serving cell of the relay UE changes, and the remote UE is connected to a network through the relay UE.

It should be noted that this step corresponds to the step on the relay UE side.

The change of the serving cell of the relay UE may include two cases: occurrence of cell reselection and occurrence of cell handover.

The remote UE receives the cell change indication information, so that the remote UE can be informed of the change of the serving cell in a timely manner based on the cell change indication information, so as to perform corresponding subsequent operations, e.g., whether relay reselection is required or whether RAU/RNAU needs to be initiated, to ensure normal work of the relay mode.

In the information transmission method according to the embodiments of the present disclosure, the remote UE receives the cell change indication information, where the cell change indication information is transmitted by the relay UE in a case that the serving cell of the relay UE changes and is used for indicating that the serving cell of the relay UE changes, and the remote UE is connected to the network through the relay UE. In this way, the remote UE can know about the change of the serving cell in a timely manner based on the cell change indication information transmitted by the relay UE, so as to perform corresponding subsequent operations, which ensures normal work of the relay mode.

Optionally, the cell change indication information includes at least one of the following:

first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

Optionally, the relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

As an optional implementation, the method according to the embodiments of the present disclosure may further include:
receiving, from the relay UE, system information of a target cell after the serving cell of the relay UE changes.

It should be noted that there is no chronological order for this step and step 601.

As an optional implementation, in step 601 of the embodiments of the present disclosure, the receiving the cell change indication information by the remote UE may include:
receiving a first message, where the first message carries the cell change indication information;
where the first message includes one of the following:
a MAC CE;
physical layer SCI;
a PC5 RRC message; or,
a PC5 non-access stratum message.

As an optional implementation, after step 601, the method according to the embodiments of the present disclosure may further include:
reading the system information of the target cell based on the cell change indication information;
where the reading of the system information of the target cell is triggered after the remote UE receives the cell change indication; specifically, whether relay reselection needs to be performed or whether RAU/RNAU needs to be initiated may be determined based on the system information of the target cell;
executing a target event based on the system information of the target cell, where the target event includes relay reselection, routing area update (RAU), radio access network based notification area update (RNAU), or target cell access.

The implementation process of the information transmission method is specifically described hereinafter with respect to the following embodiments from the perspective of device interaction.

### First embodiment

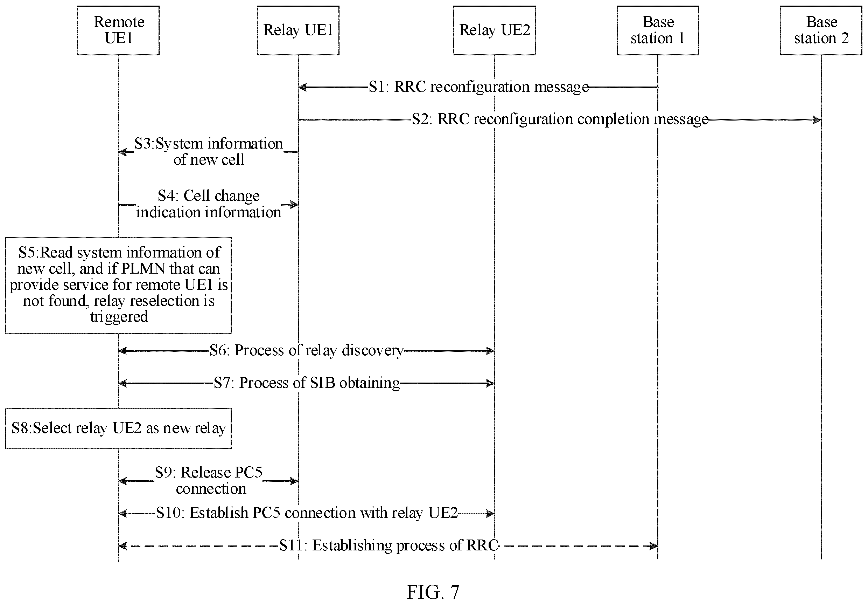

The relay UE transmits the cell change indication information via an SL MAC CE, and relay reselection occurs at the remote UE, as shown in FIG. 7.

It should be noted that initially the remote UE1 camps in the cell 1 controlled by the base station 1 through the relay UE1; the relay UE2 also camps in the cell 1 controlled by the base station 1. Afterwards, the relay UE1 switches to the cell 2 controlled by the base station 2, where the cell 1 supports only the service network PLMN1 and the cell 2 supports only the service network PLMN2.
S1: the base station 1 sends an RRC reconfiguration message to the relay UE1;
S2: the relay UE1 sends an RRC reconfiguration completion message to the base station 2;
S3-S4: the relay UE1 sends system information of a new cell to the remote UE1 and sends the cell change indication information to the remote UE1;
It should be noted that the system information of the new cell refers to system information of the cell 2.

There is no chronological order for step S3 and step S4.

S5: after receiving the cell change indication information, the remote UE1 reads the system information of the new cell, and if a PLMN that can provide a service for the remote UE1 is not found, relay reselection is triggered.

S6: the remote UE1 performs relay discovery and acquires information of the relay UE2;
S7: the remote UE1 acquires a system information block (System Information Block, SIB).

The SIB includes the system information of the cell 1 forwarded by the relay UE2, and the remote UE determines that the relay UE2 can provide a relay service for the remote UE.

S8: the remote UE1 selects the relay UE2 as the new relay;
S9: the remote UE1 releases the PC5 connection with the relay UE1;
The release of the PC5 connection may be based on explicit signaling or based on link failure.

S10: the remote UE1 establishes a PC5 connection with the relay UE2;
S11: if the remote UE1 has a demand for an access network, if the remote UE1 establishes an RRC connection to the network through the relay UE2.

The demand for the access network may be Uu service, periodic RAU, etc.

### Second embodiment

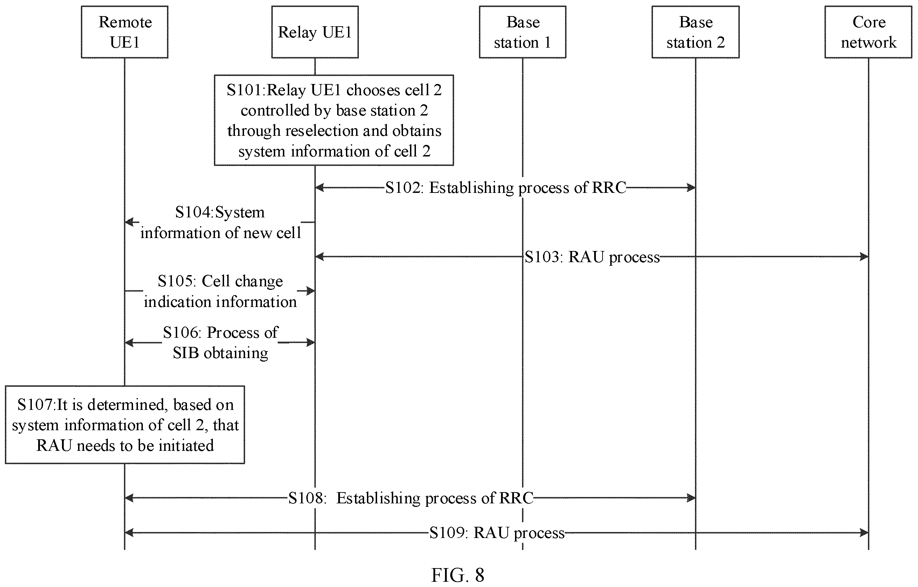

The relay UE sends the cell change indication information via a PC5-RRC message, and the remote UE initiates the RAU/RNAU, as shown in FIG. 8.

The PC5-RRC message includes an information element (Information Element, IE) of the cell change indication signaling message, the details of which can be seen in Table 3 and Table 4.

**Table 3 Indication of cell change only**

| Index | Values |
|---|---|
| 0 | Cell change |
| 1 | Reserved |

**Table 4 Indication of type of target cell**

| Index | Values |
|---|---|
| 0 | Intra-gNB cell change |
| 1 | Inter-gNB cell change |
| 2 | Inter-RAU/RNAU cell change |
| 3 | Inter-PLMN cell change |

It should be noted that initially the remote UE1 camps in the cell 1 controlled by the base station 1 through the relay UE1, and both the remote UE1 and the relay UE1 are in an idle state. The cell 1 controlled by the base station 1 and the cell 2 controlled by the base station 2 belong to different routing areas.

S101: the relay UE1 choose the cell 2 controlled by the base station 2 through reselection and acquires the system information of the cell 2;
The relay UE1 finds that routing area change has occurred.

S102: the relay UE1 establishes an RRC connection with the base station 2;
S103: the relay UE1 initiates an RAU process;
The relay UE1 initiates the RAU process to update its routing area.

S 104-S 105: the relay UE1 sends system information of the new cell to the remote UE1 and sends the cell change indication information to the remote UE1;
It should be noted that there is no chronological order between S 101-S 102 and S104-S105.

The relay UE1 sends the system information of the new cell to the remote UE1 and sends the cell change indication information to the remote UE1;
S106: the remote UE1 acquires an SIB;
Specifically, after receiving the cell change indication information, the remote UE1 acquires the SIB, reads the system information of the cell 2 forwarded by the relay UE1 in the SIB, and discovers that the routing area changes.

S107: the remote UE1 determines, based on the system information of the cell 2, that RAU needs to be initiated;
S108: the remote UE1 establishes an RRC connection with the base station 2 through the relay UE1.

S 109: the remote UE1 initiates the RAU process to update its routing area.

### Third embodiment

The relay UE sends the cell change indication information via a PC5 non-access stratum message, and the remote UE1 continues using the relay UE to access the network.

A cell change indication field is added in first SCI (first-stage (1st-stage) SCI) or second SCI (second-stage (2nd-stage) SCI), and the specific values can be seen in Tables 3 and 4.

After receiving the cell change indication information, the remote UE reads system information of the new cell forwarded by the relay UE; if it is determined based on the system information of the new cell that the remote UE can access the target cell (the new cell), the remote UE continues using the relay UE to access the network.

### Fourth embodiment

The relay UE sends the cell change indication information via a PC5 non-access stratum message, and the remote UE continues using the relay UE to access the network.

The cell change indication IE is included in the PC5 non-access stratum message, and the specific values are shown in Table 3 and Table 4.

After receiving the cell change indication information, the remote UE reads system information of the new cell forwarded by the relay UE; if it is determined based on the system information of the new cell that the remote UE can access the target cell (the new cell), the remote UE continues using the relay UE to access the network.

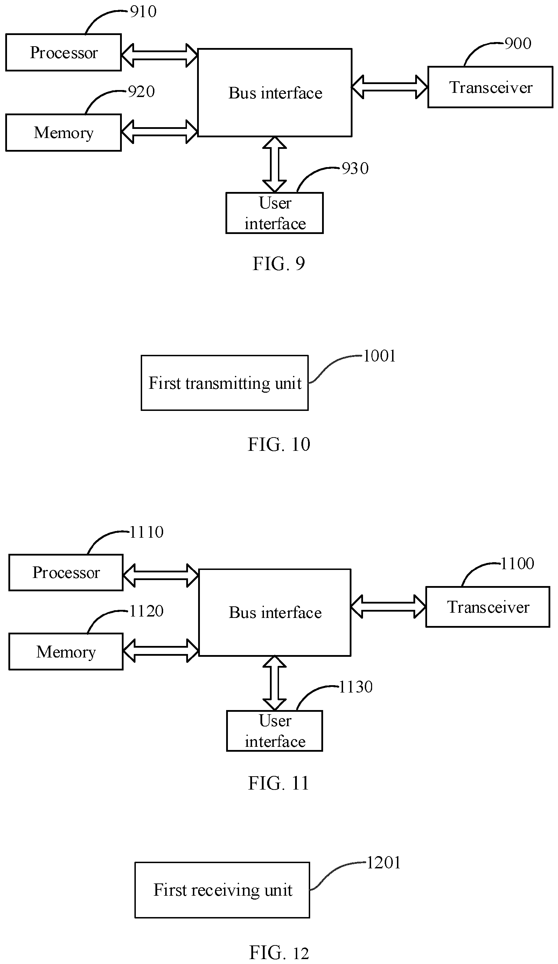

As shown in FIG. 9, embodiments of the present disclosure also provide a relay UE, including: a memory 920, a transceiver 900, and a processor 910, where the memory 920 is configured to store program instructions, the transceiver 900 is configured to transmit and receive data under control of the processor 910, and the processor 910 is configured to read the program instructions in the memory 920 and perform following operation:
transmitting to a remote UE, via the transceiver 900, cell change indication information for indicating that a serving cell of the relay UE changes, in a case that the serving cell of the relay UE changes, where the remote UE is connected to a network through the relay UE.

In FIG. 9, a bus architecture may include any quantity of interconnected buses and bridges. Various circuits including one or more processors represented by the processor 910 and a memory represented by the memory 920 are linked. The bus architecture may further link various other circuits together, such as a periphery component, a voltage stabilizer and a power management circuit, which are known in the art and are not further described herein. A bus interface provides an interface. The transceiver 900 may be multiple elements, i.e., including a transmitter and a receiver, providing a unit for communicating with various other devices on transmission media. The transmission media include a wireless channel, a wired channel, an optical cable, or other transmission media. For different user equipments, the user interface 930 may be an interface capable of connecting externally and internally with the required equipment. The connected equipment includes but not limited to a keypad, a display, a speaker, a microphone, a joystick, etc.

The processor 910 is in charge of managing the bus architecture and common processes. The memory 920 may store data used by the processor 910 in performing operations.

Optionally, the processor 910 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor 910 may adopt a multi-core architecture.

The processor 910 is configured to execute any of the methods in the embodiments of the present application according to obtained executable instructions by calling the program instructions stored in the memory. The processor 910 and the memory 920 may be physically arranged separately.

Optionally, the cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

Optionally, the relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

Optionally, the transceiver 900 is configured to:
transmit, to the remote UE, system information of a target cell after the serving cell of the relay UE changes.

Optionally, the transceiver 900 is configured to:
transmit a first message to the remote UE, where the first message carries the cell change indication information;
where the first message includes one of the following:
   a MAC CE;
   physical layer SCI;
   a PC5 RRC message; or,
   a PC5 non-access stratum message.

Optionally, the transceiver 900 is configured to:
transmit to the remote UE through broadcast, multicast or unicast, the cell change indication information.

Optionally, the MAC CE has a corresponding first logical channel identity (LCID) in a case that the cell change indication information is carried in the MAC CE, and the first LCID is used for indicating that the cell change indication information is carried in the MAC CE.

Optionally, change of the serving cell includes handover or cell reselection.

With the relay UE according to the embodiments of the present disclosure, in a case that the serving cell of the relay UE changes, the relay UE transmits to the remote UE the cell change indication information for indicating that the serving cell of the relay UE changes, where the remote UE is connected to the network through the relay UE. In this way, it is ensured that the remote UE operating in the relay mode can know about the change of the serving cell in a timely manner so as to perform corresponding subsequent operations, which ensures normal work of the relay mode.

As shown in FIG. 10, embodiments of the present disclosure also provide an information transmission device, including:
a first transmitting unit 1001, configured to transmit to a remote UE, cell change indication information for indicating that a serving cell of a relay UE changes, in a case that the serving cell of the relay UE changes, where the remote UE is connected to a network through the relay UE.

Optionally, the cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

Optionally, the relationship between the target cell and the source cell includes one of the following:
the relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

Optionally, the information transmission device according to the embodiments of the present disclosure may further include:
a second transmitting unit, configured to transmit, to the remote UE, system information of a target cell after the serving cell of the relay UE changes.

Optionally, the first transmitting unit 1001 is specifically configured to:
transmit a first message to the remote UE, where the first message carries the cell change indication information;
where the first message includes one of the following:
a MAC CE;
physical layer SCI;
a PC5 RRC message; or,
a PC5 non-access stratum message.

Optionally, the first transmitting unit 1001 is specifically configured to:
transmit to the remote UE through broadcast, multicast or unicast, the cell change indication information.

Optionally, the MAC CE has a corresponding first logical channel identity (LCID) in a case that the cell change indication information is carried in the MAC CE, and the first LCID is used for indicating that the cell change indication information is carried in the MAC CE.

Optionally, change of the serving cell includes handover or cell reselection.

The information transmission device according to the embodiments of the present disclosure transmits to the remote UE the cell change indication information for indicating that the serving cell of the relay UE changes, in a case that the serving cell of the relay UE changes, where the remote UE is connected to the network through the relay UE. In this way, it is ensured that the remote UE operating in the relay mode can know about the change of the serving cell in a timely manner so as to perform corresponding subsequent operations, which ensures normal work of the relay mode.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

It is to be noted that the device according to the embodiments of the present disclosure can realize all the method steps achieved by the above method embodiments and the same technical effects can be realized. The same parts of the present embodiments as the method embodiments, and the beneficial effects, are not be repeated herein.

In some embodiments of the present disclosure, a processor readable storage medium is further provided, the processor readable storage medium stores program instructions, and the program instructions are used to cause a processor to perform following step:
transmitting to a remote UE, cell change indication information for indicating that a serving cell of the relay UE changes, in a case that the serving cell of the relay UE changes, where the remote UE is connected to a network through the relay UE.

The program, when being executed by the processor, is capable of realizing all the implementations in the above embodiments of the method applied to the relay UE side as shown in FIG. 3, which are not described herein to avoid repetition.

As shown in FIG. 11, embodiments of the present disclosure also provide a remote UE, including: a memory 1120, a transceiver 1100, and a processor 1110, where the memory 1120 is configured to store a computer program, the transceiver 1100 is configured to transmit and receive data under control of the processor 1110, and the processor 1110 is configured to read the computer program in the memory 1120 and perform following operation:
receiving cell change indication information, where the cell change indication information is transmitted by a relay UE in a case that a serving cell of the relay UE changes and is used for indicating that the serving cell of the relay UE changes, and the remote UE is connected to a network through the relay UE.

In FIG. 11, a bus architecture may include any quantity of interconnected buses and bridges. Various circuits including one or more processors represented by the processor 1110 and a memory represented by the memory 1120 are linked. The bus architecture may further link various other circuits together, such as a periphery component, a voltage stabilizer and a power management circuit, which are known in the art and are not further described herein. A bus interface provides an interface. The transceiver 1100 may be multiple elements, i.e., including a transmitter and a receiver, providing a unit for communicating with various other devices on transmission media. The transmission media include a wireless channel, a wired channel, an optical cable, or other transmission media. For different user equipments, the user interface 1130 may be an interface capable of connecting externally and internally with the required equipment. The connected equipment includes but not limited to a keypad, a display, a speaker, a microphone, a joystick, etc.

The processor 1110 is in charge of managing the bus architecture and common processes. The memory 1120 may store data used by the processor 1110 in performing operations.

Optionally, the processor 1110 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor 1110 may adopt a multi-core architecture.

The processor 1110 is configured to execute any of the methods in the embodiments of the present application according to obtained executable instructions by calling the program instructions stored in the memory. The processor 1110 and the memory may be physically arranged separately.

Optionally, the cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

Optionally, the relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

Optionally, the transceiver 1100 is configured to:
receive, from the relay UE, system information of a target cell after the serving cell of the relay UE changes.

Optionally, the transceiver 1100 is configured to:
receive a first message, where the first message carries the cell change indication information;
where the first message includes one of the following:
a MAC CE;
physical layer SCI;
a PC5 RRC message; or,
a PC5 non-access stratum message.

Optionally, the processor 1110 is configured to read the computer program in the memory and perform following operations:
reading the system information of the target cell based on the cell change indication information; and
executing a target event based on the system information of the target cell, where the target event includes relay reselection, routing area update (RAU), radio access network based notification area update (RNAU), or target cell access.

Optionally, change of the serving cell includes handover or cell reselection.

The remote UE according to the embodiments of the present disclosure receives the cell change indication information, where the cell change indication information is transmitted by the relay UE in a case that the serving cell of the relay UE changes and is used for indicating that the serving cell of the relay UE changes, and the remote UE is connected to the network through the relay UE. In this way, the remote UE can know about the change of the serving cell in a timely manner based on the cell change indication information transmitted by the relay UE, so as to perform corresponding subsequent operations, which ensures normal work of the relay mode.

As shown in FIG. 12, embodiments of the present disclosure also provide an information transmission device, including:
a first receiving unit 1201, configured to receive cell change indication information, where the cell change indication information is transmitted by a relay UE in a case that a serving cell of the relay UE changes and is used for indicating that the serving cell of the relay UE changes, and a remote UE is connected to a network through the relay UE.

Optionally, the cell change indication information includes at least one of the following:
first indication information, where the first indication information is used for indicating that the serving cell of the relay UE changes; or,
second indication information, where the second indication information is used for indicating a relationship between a target cell after the serving cell of the relay UE changes and a source cell before the serving cell of the relay UE changes.

Optionally, the relationship between the target cell and the source cell includes one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

Optionally, the information transmission device according to the embodiments of the present disclosure further includes:
a second receiving unit, configured to receive, from the relay UE, system information of a target cell after the serving cell of the relay UE changes

Optionally, the first receiving unit 1201 is specifically configured to:
receive a first message, where the first message carries the cell change indication information;
where the first message includes one of the following:
   a MAC CE;
   physical layer SCI;
   a PC5 RRC message; or,
   a PC5 non-access stratum message.

Optionally, the information transmission device according to the embodiments of the present disclosure further includes:
an information reading unit, configured to read the system information of the target cell based on the cell change indication information; and
a first processing unit, configured to execute a target event based on the system information of the target cell, where the target event includes relay reselection, routing area update (RAU), radio access network based notification area update (RNAU), or target cell access.

Optionally, change of the serving cell includes handover or cell reselection.

The information transmission device according to the embodiments of the present disclosure receives the cell change indication information, where the cell change indication information is transmitted by the relay UE in a case that the serving cell of the relay UE changes and is used for indicating that the serving cell of the relay UE changes, and the remote UE is connected to the network through the relay UE. In this way, the remote UE can know about the change of the serving cell in a timely manner based on the cell change indication information transmitted by the relay UE, so as to perform corresponding subsequent operations, which ensures normal work of the relay mode.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

It is to be noted that the device according to the embodiments of the present disclosure can realize all the method steps achieved by the above method embodiments and the same technical effects can be realized. The same parts of the present embodiments as the method embodiments, and the beneficial effects, are not be repeated herein.

In some embodiments of the present disclosure, a processor readable storage medium is further provided, the processor readable storage medium stores program instructions, and the program instructions are used to cause a processor to perform following step:
receiving cell change indication information, where the cell change indication information is transmitted by a relay UE in a case that a serving cell of the relay UE changes and is used for indicating that the serving cell of the relay UE changes, and the remote UE is connected to a network through the relay UE.

The program, when being executed by the processor, is capable of realizing all the implementations in the above embodiments of the method applied to the remote UE side as shown in FIG. 6, which are not described herein to avoid repetition.

The technical solutions in the embodiments of the present disclosure may be applied to various systems, especially fifth-generation mobile communication technology (5th-Generation, 5G) systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a UE and a network device. The system may also include a core network part, such as an evolved packet system (Evolved Packet System, EPS), a 5G system (5GS), etc.

The UE involved in the embodiments of the present disclosure may refers to a device that provides voice and/or data connectivity to a user, a handheld device with a wireless connection function, or other processing devices connected to a wireless modem. In different systems, the name of the UE device may be different. For example, in 5G systems, the UE device may be referred to as a user equipment (User Equipment, UE). A wireless UE device may communicate with one or more core networks (Core Network, CN) through a radio access network (Radio Access Network, RAN). The wireless UE device may be a mobile UE device, such as a mobile phone (or referred to as a "cellular" phone) or a computer with a mobile UE device, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless UE device may be referred to as a system, a subscriber unit (subscriber unit), a subscriber station (subscriber station), a mobile station (mobile station), a mobile (mobile), a remote station (remote station), an access point (access point), a remote UE (remote UE), an access UE (access UE), a user UE (user UE), a user agent (user agent), or a user device (user device), which is not limited in the embodiments of the present disclosure.

A person skilled in the art should understand that the embodiments of the present disclosure may be provided as methods, systems, or computer program products. Therefore, the present disclosure may adopt the form of complete hardware embodiments, complete software embodiments, or embodiments combining software and hardware aspects. Moreover, the present disclosure may adopt the form of a computer program product implemented on one or more computer available storage media (including but not limited to a disk storage, an optical storage, etc.) containing computer available program code.

The present disclosure is described with reference to flowcharts and/or block diagrams of methods, devices (systems), and computer program products according to the embodiments of the present disclosure. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determining module may be a separate processing element, or may be integrated into a certain chip of the above device, or, may be stored in the memory of the above device in the form of program code, and a certain processing element of the above device may call and execute the functions of the determining module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Apparently, those skilled in the art may make various modifications and variations to the present disclosure, without departing from the spirit and scope of the present disclosure. In this case, if the modifications and variations of the present disclosure fall within the scope of the claims of the present disclosure and their equivalent techniques, the present disclosure is intended to include these modifications and variations.

## Claims

1. An information transmission method, comprising:
transmitting to a remote user equipment (UE), by a relay UE, cell change indication information for indicating that a serving cell of the relay UE changes, in a case that the serving cell of the relay UE changes, wherein the remote UE is connected to a network through the relay UE.

2. The method according to claim 1, wherein the cell change indication information comprises at least one of the following:
first indication information, wherein the first indication information is used for indicating that the serving cell of the relay UE changes; or,
second indication information, wherein the second indication information is used for indicating the relationship between the target cell after the serving cell of the relay UE changes and the source cell before the serving cell of the relay UE changes.

3. The method according to claim 2, wherein the relationship between the target cell and the source cell comprises one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

4. The method according to claim 1, further comprising:
transmitting, to the remote UE, system information of a target cell after the serving cell of the relay UE changes.

5. The method according to claim 1, wherein the transmitting to the remote UE by the relay UE, the cell change indication information for indicating that the serving cell of the relay UE changes, comprises:
transmitting a first message to the remote UE, wherein the first message carries the cell change indication information;
wherein the first message comprises one of the following:
a media access control layer control element (MAC CE);
physical layer sidelink control information (SCI);
a direct communication interface (PC5) radio resource control (RRC) message; or,
a PC5 non-access stratum message.

6. The method according to claim 1, wherein the transmitting to the remote UE by the relay UE, the cell change indication information for indicating that the serving cell of the relay UE changes, comprises:
transmitting to the remote UE through broadcast, multicast or unicast by the relay UE, the cell change indication information.

7. The method according to claim 4, wherein the MAC CE has a corresponding first logical channel identity (LCID) in a case that the cell change indication information is carried in the MAC CE, and the first LCID is used for indicating that the cell change indication information is carried in the MAC CE.

8. The method according to claim 1, wherein change of the serving cell comprises handover or cell reselection.

9. An information transmission method, comprising:
receiving cell change indication information by a remote UE, wherein the cell change indication information is transmitted by a relay UE in a case that a serving cell of the relay UE changes and is used for indicating that the serving cell of the relay UE changes, and the remote UE is connected to a network through the relay UE.

10. The method according to claim 9, wherein the cell change indication information comprises at least one of the following:
first indication information, wherein the first indication information is used for indicating that the serving cell of the relay UE changes; or,
second indication information, wherein the second indication information is used for indicating a relationship between a target cell after the serving cell of the relay UE changes and a source cell before the serving cell of the relay UE changes.

11. The method according to claim 10, wherein the relationship between the target cell and the source cell comprises one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

12. The method according to claim 9, further comprising:
receiving, from the relay UE, system information of a target cell after the serving cell of the relay UE changes.

13. The method according to claim 9, wherein the receiving the cell change indication information by the remote UE comprises:
receiving a first message, wherein the first message carries the cell change indication information;
wherein the first message comprises one of the following:
a media access control layer control element (MAC CE);
physical layer sidelink control information (SCI);
a direct communication interface (PCS) radio resource control (RRC) message; or,
a PC5 non-access stratum message.

14. The method according to claim 12, wherein after the receiving the cell change indication information by the remote UE, the method further comprises:
reading the system information of the target cell based on the cell change indication information; and
executing a target event based on the system information of the target cell, wherein the target event comprises relay reselection, routing area update (RAU), radio access network based notification area update (RNAU), or target cell access.

15. The method according to claim 9, wherein change of the serving cell comprises handover or cell reselection.

16. A relay UE, comprising: a memory, a transceiver, and a processor, wherein the memory is configured to store program instructions, the transceiver is configured to transmit and receive data under control of the processor, and the processor is configured to read the program instructions in the memory and perform following operation:
transmitting to a remote UE, via the transceiver, cell change indication information for indicating that a serving cell of the relay UE changes, in a case that the serving cell of the relay UE changes, wherein the remote UE is connected to a network through the relay UE.

17. The relay UE according to claim 16, wherein the cell change indication information comprises at least one of the following:
first indication information, wherein the first indication information is used for indicating that the serving cell of the relay UE changes; or,
second indication information, wherein the second indication information is used for indicating a relationship between a target cell after the serving cell of the relay UE changes and a source cell before the serving cell of the relay UE changes.

18. The relay UE according to claim 17, wherein the relationship between the target cell and the source cell comprises one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

19. The relay UE according to claim 16, wherein the transceiver is configured to:
transmit, to the remote UE, system information of a target cell after the serving cell of the relay UE changes.

20. The relay UE according to claim 16, wherein the transceiver is configured to:
transmit a first message to the remote UE, wherein the first message carries the cell change indication information;
wherein the first message comprises one of the following:
a media access control layer control element (MAC CE);
physical layer sidelink control information (SCI);
a direct communication interface (PCS) radio resource control (RRC) message; or,
a PC5 non-access stratum message.

21. The relay UE according to claim 16, wherein the transceiver is configured to:
transmit to the remote UE through broadcast, multicast or unicast, the cell change indication information.

22. The relay UE according to claim 20, wherein the MAC CE has a corresponding first logical channel identity (LCID) in a case that the cell change indication information is carried in the MAC CE, and the first LCID is used for indicating that the cell change indication information is carried in the MAC CE.

23. The relay UE according to claim 16, wherein change of the serving cell comprises handover or cell reselection.

24. An information transmission device, comprising:
a first transmitting unit, configured to transmit to a remote UE, cell change indication information for indicating that a serving cell of a relay UE changes, in a case that the serving cell of the relay UE changes, wherein the remote UE is connected to a network through the relay UE.

25. A remote UE, comprising: a memory, a transceiver, and a processor, wherein the memory is configured to store a computer program, the transceiver is configured to transmit and receive data under control of the processor, and the processor is configured to read the computer program in the memory and perform following operation:
receiving cell change indication information via a transceiver, wherein the cell change indication information is transmitted by a relay UE in a case that a serving cell of the relay UE changes and is used for indicating that the serving cell of the relay UE changes, and the remote UE is connected to a network through the relay UE.

26. The remote UE according to claim 25, wherein the cell change indication information comprises at least one of the following:
first indication information, wherein the first indication information is used for indicating that the serving cell of the relay UE changes; or,
second indication information, wherein the second indication information is used for indicating a relationship between a target cell after the serving cell of the relay UE changes and a source cell before the serving cell of the relay UE changes.

27. The remote UE according to claim 26, wherein the relationship between the target cell and the source cell comprises one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

28. The remote UE according to claim 25, wherein the transceiver is configured to:
receive, from the relay UE, system information of a target cell after the serving cell of the relay UE changes.

29. The remote UE according to claim 25, wherein the transceiver is configured to:
receive a first message, wherein the first message carries the cell change indication information;
wherein the first message comprises one of the following:
a media access control layer control element (MAC CE);
physical layer sidelink control information (SCI);
a direct communication interface (PCS) radio resource control (RRC) message; or,
a PC5 non-access stratum message.

30. The remote UE according to claim 28, wherein the processor is configured to read the computer program in the memory and perform following operations:
reading the system information of the target cell based on the cell change indication information; and
executing a target event based on the system information of the target cell, wherein the target event comprises relay reselection, routing area update (RAU), radio access network based notification area update (RNAU), or target cell access.

31. The remote UE according to claim 25, wherein change of the serving cell comprises handover or cell reselection.

32. An information transmission device, comprising:
a first receiving unit, configured to receive cell change indication information, wherein the cell change indication information is transmitted by a relay UE in a case that a serving cell of the relay UE changes and is used for indicating that the serving cell of the relay UE changes, and a remote UE is connected to a network through the relay UE.

33. The information transmission device according to claim 32, wherein the cell change indication information comprises at least one of the following:
first indication information, wherein the first indication information is used for indicating that the serving cell of the relay UE changes; or,
second indication information, wherein the second indication information is used for indicating a relationship between a target cell after the serving cell of the relay UE changes and a source cell before the serving cell of the relay UE changes.

34. The information transmission device according to claim 33, wherein the relationship between the target cell and the source cell comprises one of the following:
the target cell and the source cell are cells under a same base station;
the target cell and the source cell are cells under different base stations;
the target cell and the source cell are cells of different systems;
the target cell and the source cell are cells in different public land mobile networks (PLMN);
the target cell and the source cell are cells belonging to different Route Area Update (RAU); or,
the target cell and the source cell are cells belonging to different Radio Access Network Based Notification Area Update (RNAU).

35. The information transmission device according to claim 32, further comprising:
a second receiving unit, configured to receive, from the relay UE, system information of a target cell after the serving cell of the relay UE changes.

36. The information transmission device according to claim 32, wherein the first receiving unit is specifically configured to:
receive a first message, wherein the first message carries the cell change indication information;
wherein the first message comprises one of the following:
a media access control layer control element (MAC CE);
physical layer sidelink control information (SCI);
a direct communication interface (PCS) radio resource control (RRC) message; or,
a PC5 non-access stratum message.

37. The information transmission device according to claim 35, further comprising:
an information reading unit, configured to read the system information of the target cell based on the cell change indication information; and
a first processing unit, configured to execute a target event based on the system information of the target cell, wherein the target event comprises relay reselection, routing area update (RAU), radio access network based notification area update (RNAU), or target cell access.

38. The information transmission device according to claim 32, wherein change of the serving cell comprises handover or cell reselection.

39. A processor readable storage medium, wherein the processor readable storage medium stores a computer program, and the computer program is used to cause a processor to perform steps of the information transmission method according to any one of claims 1 to 8, or to perform steps of the information transmission method according to any one of claims 9 to 15.
